# FASCICULE DE BREVET EUROPEEN

(11) **EP 1 433 012 B1**
(45) Date de publication et mention de la délivrance du brevet: **14.12.2005**
(21) Numéro de dépôt: 02800171.7
(22) Date de dépôt: 01.10.2002
(51) Int. Cl.: G02B 26/10, G02B 17/08

(54) **DISPOSITIF OPTRONIQUE DE VEILLE PASSIVE**
PASSIVE OPTOELEKTRONISCHE ÜBERWACHUNGSEINRICHTUNG
PASSIVE OPTO-ELECTRONIC MONITORING DEVICE

(30) Priorité: 02.10.2001 FR 0112667
(43) Date de publication de la demande: 30.06.2004
(73) Titulaire: Thales, 75008 Paris (FR)
(72) Inventeur: PAPUCHON, Michel, c/o Thales Intellectual Property, 94117 Arcueil Cedex (FR); ANTIER, Philippe, c/o Thales Intellectual Property, 94117 Arcueil Cedex (FR); PERRUCHOT, L., c/o Thales Intellectual Property, 94117 Arcueil Cedex (FR); VERDAGUER, Alain, c/oThales Intellectual Property, 94117 Arcueil Cedex (FR)
(74) Mandataire: Brochard, Pascale
(86) Numéro de dépôt international: PCT/FR2002/003342
(87) Numéro de publication internationale: WO 2003/029876

(56) Documents cités:
- WO-A-86/03916
- FR-A- 2 739 192
- US-A- 4 431 917

## Description

La présente invention concerne un dispositif optronique de veille passive, destiné notamment à être installé sur un aéronef pour détecter les menaces potentielles.

Les dispositifs optroniques de veille passive sont particulièrement intéressants du point de vue opérationnel car ce sont des systèmes ne nécessitant pas d'émission de rayonnement et qui sont donc discrets. Dans un tel système, il est nécessaire de pouvoir faire une observation dans un champ souvent important alors que l'optique frontale du dispositif présente un champ instantané utile limité. On est alors conduit à utiliser des moyens de balayage de façon à pouvoir observer la scène dans le champ total d'observation, les figures de balayage étant optimisées en fonction notamment du champ total d'observation et de la vitesse de balayage.

Dans les systèmes de veille infrarouge par exemple, les détecteurs typiquement utilisés sont basés sur des géométries du type barrettes de détecteurs sensibles dans la bande 3-5 µm ou dans la bande 8-12 µm. Dans la plupart des systèmes existants, il s'agit de barrettes de MxQ détecteurs élémentaires sensibles, également appelés pixels, par exemple 288x4 pixels. Grâce au dispositif de balayage, le champ total à observer est analysé par la barrette de détecteurs qui reste fixe dans le système. En disposant de barrettes de MxQ pixels (288x4 dans l'exemple donné), il est possible de faire une analyse d'un champ élémentaire avec M points dans une direction (par exemple 288) et de cumuler les informations données par les Q points (par exemple 4) dans l'autre direction, de telle sorte à améliorer le rapport signal sur bruit de la détection afin d'obtenir une sensibilité globale plus importante, et donc une plus grande portée de détection.

Cependant, le taux de cumul possible est limité par le nombre Q de points sur lequel il est réalisé. De plus, le signal utile total est limité par le temps total pendant lequel une cible ponctuelle à détecter est vue par un pixel de la barrette. Ce temps, autrement appelé temps d'intégration, est en particulier relié à la vitesse à laquelle il faut balayer la scène.

La présente invention permet de remédier aux inconvénients précités en proposant un dispositif optronique de veille passive permettant l'utilisation d'un détecteur matriciel et non plus d'une barrette.

Plus précisément, l'invention propose un dispositif optronique de veille passive, comprenant une optique frontale de champ instantané utile donné, des moyens de balayage d'une scène avec un champ total d'observation donné, des moyens de formation de l'image de la scène et des moyens de détection de ladite image. Un tel dispositif, spécifié dans le préambule de la revendication 1, est connu de FR-A-2 739 192. Le dispositif selon l'invention est caractérisé en ce que les moyens de détection comprennent un détecteur matriciel à deux dimensions, le champ du détecteur selon chacune des dimensions étant supérieur ou égal audit champ instantané utile de l'optique frontal selon ladite dimension, et permettent l'acquisition, pour chaque zone élémentaire de la scène correspondant au champ instantané utile de l'optique frontal, de N imagettes formées sur ledit détecteur, N ≥ 1, avec un temps d'intégration donné pour chaque imagette, et en ce que le dispositif comprend des moyens de contre-balayage permettant de compenser les mouvements de l'image dus au balayage de la scène pendant l'acquisition des N imagettes

Avantageusement, plusieurs imagettes sont acquises pour chaque zone élémentaire de la scène, ce qui permet d'augmenter le rapport signal sur bruit de l'image détectée.

Selon une variante préférée de l'invention, les imagettes sont formées sur des zones différentes du détecteur matriciel afin de réduire le risque d'erreur dus à des défauts éventuels du détecteur matriciel.

D'autres avantages et caractéristiques apparaîtront plus clairement à la lecture de la description qui suit, illustrée par les figures annexées qui représentent :
- La figure 1, un schéma d'un exemple de dispositif de veille passive selon l'invention ;
- Les figures 2A et 2B, des schémas illustrant en fonction du temps les mouvements des moyens de balayage et de contre-balayage dans un exemple donné ;
- La figure 3, un exemple de réalisation du dispositif selon l'invention ;
- La figure 4, un exemple de détecteur matriciel du dispositif selon l'invention.

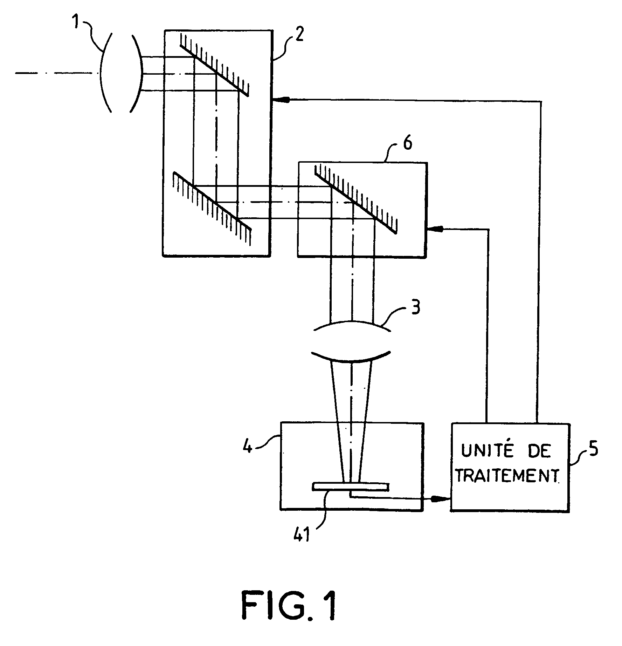

La figure 1 représente le schéma d'un exemple de dispositif de veille passive selon l'invention. Il s'agit par exemple d'un dispositif de veille infrarouge pour la détection d'objets lointains caractérisés par leur signature infrarouge. Le dispositif de veille comprend une optique frontale 1 de champ instantané donné et des moyens de balayage 2 permettant l'observation d'une scène avec un champ total donné. Les moyens de balayage, dont la mise en oeuvre est connue de l'état de l'art, sont contrôlés par une unité de traitement 5, et permettent le balayage de la scène selon des figures de balayage et avec une vitesse de balayage donnée, qui dépendent du champ à observer et d'autres paramètres opérationnels. Dans le cas de détection multi-spectrale, l'optique frontale et les moyens de balayage peuvent de façon connue, être formés d'un système catadioptrique. Le dispositif de veille comprend également des moyens de formation de l'image 3 et des moyens de détection 4, avec un détecteur 41.

Dans le cas d'un dispositif de veille infrarouge, il s'agit par exemple d'un détecteur sensible dans la bande 3-5 µm ou 8-12 µm, refroidi selon les techniques connues. Dans les deux cas, un matériau composé de Mercure, Cadmium et Tellure (HgCdTe) peut être utilisé (avec des compositions adaptées pour les deux bandes). D'autres matériaux peuvent être utilisés comme les matériaux multi-puits quantiques dans les composés Arsénure de Gallium / Arsénure de Gallium et d'Aluminium (GaAs/AlGaAs). Le composé Antimonure d'Indium (InSB) peut également être utilisé mais seulement dans la bande 3-5µm.

Selon l'invention, le détecteur 41 est un détecteur matriciel à deux dimensions, le champ du détecteur selon chacune des dimensions étant supérieur ou égal au champ instantané utile de l'optique frontal selon ladite dimension. En outre, les moyens de détection assurent l'acquisition, pour chaque zone élémentaire de la scène correspondant au champ instantané utile de l'optique frontal, de N imagettes formées sur ledit détecteur, N ≥ 1, avec un temps d'intégration donné pour chaque imagette. Le dispositif selon l'invention comprend en outre des moyens de contre-balayage 6 permettant de compenser les mouvements de l'image dus au balayage de la scène pendant l'acquisition des N imagettes. Par exemple, l'unité de traitement 5 synchronise l'acquisition des imagettes par les moyens de détection avec le mouvement des moyens de contre-balayage 6. Grâce à l'utilisation d'un détecteur matriciel avec un grand nombre de pixels, le champ observé instantanément est plus important et l'on peut ainsi profiter du temps gagné lors du balayage de la scène pour acquérir plusieurs imagettes d'un même champ élémentaire. Avantageusement, des moyens de traitement permettent de cumuler les informations des différentes imagettes qui auront « vu » le même point à détecter. Comme ces informations proviennent de plusieurs imagettes indépendantes, ceci permet de diminuer les fausses alarmes qui peuvent être générées par exemple par le bruit apporté par l'électronique.

Les moyens de contre-balayage 6 permettent de compenser les mouvements de l'image de la scène observée dus au balayage du dispositif pendant l'acquisition des N imagettes. Plus précisément, le temps d'acquisition de l'imagette étant composé d'une part d'un temps d'intégration Tᵢ par le détecteur et d'autre part d'un temps T_{ℓ} nécessaire à la lecture de l'information fournie par le détecteur matriciel, les moyens de contre-balayage permettent de garder la zone observée fixe sur le détecteur pendant tout le temps nécessaire à l'intégration du signal et d'éviter ainsi un effet de « flou » sur l'imagette.

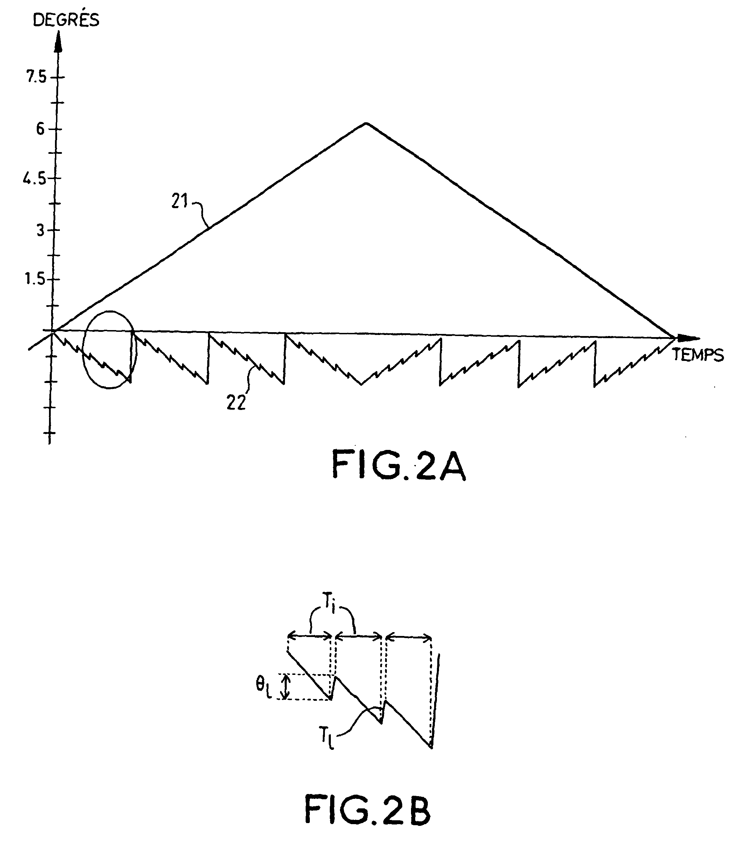

La figure 2A illustre selon un exemple les mouvements angulaires dans une direction donnée, des moyens de balayage 2 et de contre-balayage 6 en fonction du temps. La figure 2B est un agrandissement d'une zone de la figure 2A, repérée par un cercle. Sur la figure 2A est représentée une première courbe 21 représentant le mouvement angulaire des moyens de balayage 2 en fonction du temps. Dans cet exemple, l'amplitude du champ total d'observation dans la direction de balayage est de plus ou moins 6° environ. La courbe 22 représente le mouvement angulaire dans la même direction des moyens de contre-balayage 6 en fonction du temps. Ce mouvement est détaillé sur la figure 2B. Dans cet exemple, on a supposé que pour chaque zone élémentaire de la scène correspondant à un champ instantané de l'optique frontal de 1,5°, six imagettes sont acquises par les moyens de détection. Les moyens de contre-balayage assurent un mouvement de rotation contraire aux moyens de balayage et permettent ainsi de maintenir fixe chaque imagette sur le détecteur matriciel pendant le temps Tᵢ (figure 2B) d'intégration d'une imagette. Après l'acquisition des six imagettes, les moyens de contre-balayage reviennent en position initiale pour recommencer le processus avec la zone élémentaire suivante de la scène dont le champ est également de 1,5°.

Avantageusement, le champ du détecteur matriciel 41 selon l'une au moins des directions de balayage étant strictement supérieur au champ instantané utile de l'optique frontal selon cette dimension, les moyens de contre-balayage permettent la formation des imagettes sur des zones différentes du détecteur matriciel ; par exemple, ces zones sont décalées selon cette dimension de un ou plusieurs pixels dudit détecteur. Cela permet de s'affranchir d'erreurs qui pourraient résulter de défauts du détecteur (non-uniformités, pixels défectueux, etc.). On profite du temps de lecture T_{ℓ} des imagettes pour assurer ce décalage. Ainsi, sur la figure 2B, le mouvement angulaire θ_{ℓ} des moyens de contre-balayage pendant le temps de lecture T_{ℓ} permet un décalage sur le détecteur matriciel d'une imagette par rapport à la précédente d'un nombre donné de pixel, par exemple d'un pixel.

Le fonctionnement général du dispositif selon l'invention sera mieux compris en détaillant l'exemple suivant.

On suppose que le champ d'observation total est de 18°x7,5° et la vitesse de balayage de 22°.sec⁻¹ dans la direction de plus grand champ (dans cet exemple, la direction dans laquelle il faut couvrir 18°). Le détecteur matriciel présente des dimensions standard de 240x320 pixels. Dans cet exemple, le champ instantané utile de l'optique frontal est limité à 1,5°x7,5°, ce qui correspond à 64x320 pixels du détecteur matriciel. Le temps d'intégration par imagette est typiquement de 3 msec (2 msec de temps d'intégration, 1 msec de temps de lecture). La zone d'observation est observée par champs successifs de 1,5x7,5°, formant ainsi 12 zones élémentaires successives. Comme la vitesse de balayage est de 22°.sec⁻¹, on dispose de 66 msec par zone élémentaire. Il est donc possible d'acquérir 22 imagettes par zone élémentaire. Ceci signifie donc que l'on peut voir" le point à détecter sur le détecteur matriciel 22 fois et effectuer des opérations de traitement de signal comme l'intégration des signaux, dans le but de diminuer les bruits. Cette opération peut être réalisée selon des techniques connues et dans ce cas un gain d'un facteur 22^{1/2} peut être obtenu sur le rapport signal sur bruit. L'acquisition de chaque imagette est permise grâce à l'utilisation des moyens de contre-balayage qui stabilisent l'image pendant le temps d'intégration de la matrice (2 msec). Avantageusement, les moyens de contre-balayage se repositionnent pendant le temps de lecture de l'imagette (1 msec) entraînant par exemple un décalage d'un pixel sur le détecteur matriciel d'une imagette par rapport à l'autre. Dans ce cas, au bout de 22 imagettes, le point à détecter se sera déplacé de 22 pixels sur le détecteur. Le nombre d'imagettes qu'il est possible d'accumuler par zone élémentaire dépend ainsi directement de la vitesse de balayage et du champ total à balayer.

En reprenant l'exemple de réalisation précédent, on voit que, même dans le cas ou 22 imagettes sont acquises avec un décalage d'un pixel à chaque fois, la taille de la matrice utilisée est de 64+22, soit 86 pixels. Autrement dit, sur 240 pixels, 86 sont utilisés pour analyser une zone élémentaire du champ total. Selon une variante du dispositif selon l'invention, le détecteur matriciel présentant un champ supérieur à p fois le champ instantané utile de l'optique frontal selon l'une au moins de ses dimensions, p entier supérieur ou égal à 2, le dispositif de veille comprend des moyens de projection de l'image d'une zone élémentaire de la scène sur p zones distinctes du détecteur matriciel. Dans l'exemple précédent, il est ainsi possible de projeter l'image d'une zone élémentaire sur trois zones distinctes du détecteur matriciel. Ainsi, différentes zones de la matrice peuvent être utilisées pour améliorer les performances de la détection. Par exemple, des attributs propres au flux émis par les objets présents dans la scène, tels que la signature spectrale ou la polarisation, peuvent être utilisés pour améliorer les performances de la détection.

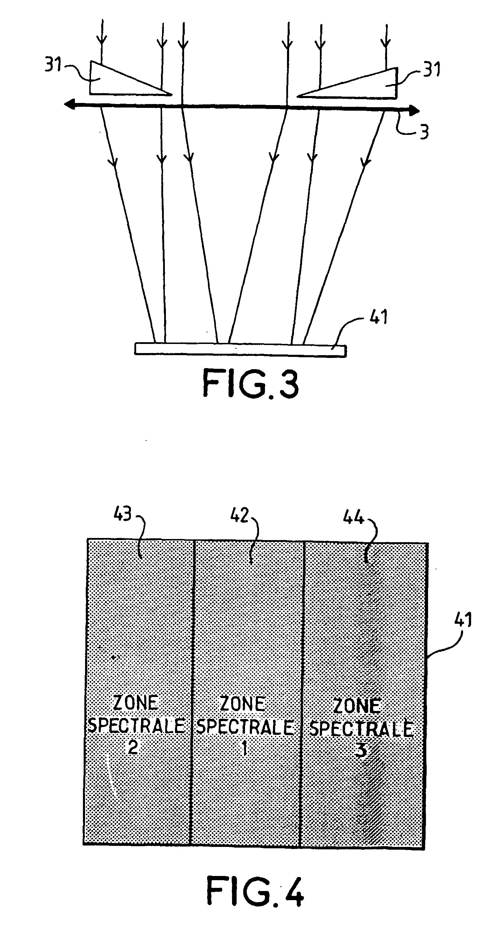

Par exemple, les moyens de projection comprennent un réseau de diffraction positionné sensiblement en pupille des moyens de formation de l'image. La figure 3 représente un autre exemple de réalisation dans lequel les moyens de projection sont formés de prismes 31 positionnés sensiblement en pupille des moyens de formation de l'image 3 et permettant de projeter l'image d'une zone élémentaire de la scène sur différentes zones du détecteur matriciel 41.

Selon une variante, les zones du détecteur matriciel ainsi définies permettent de détecter des bandes spectrales différentes de la bande spectrale totale observée. La figure 4 représente ainsi dans l'exemple de réalisation précédemment décrit, 3 zones spectrales différentes 42, 43, 44. Pour obtenir des zones de bande spectrale différente, les moyens de détection comprennent par exemple des filtres passe-bande positionnés sur les zones du détecteur matriciel et permettant la détection d'images selon des bandes spectrales données. Le détecteur matriciel peut également présenter une sensibilité spectrale distincte selon chacune desdites zones. Par exemple, la zone centrale (zone 42 sur la figure 4) détecte toute la bande et les deux zones latérales (43, 44) détectent respectivement la partie inférieure et la partie supérieure de la bande de sensibilité du détecteur matriciel. Selon une variante, les moyens de projection sur des zones distinctes du détecteur matriciel peuvent également faire à la fois la séparation angulaire et le filtrage en longueur d'onde en utilisant des hologrammes ou réseaux épais, dont les propriétés sont sensibles à la longueur d'onde. Dans le cas d'utilisation de prismes comme moyens de projection (voir figure 3), des filtres passe-bande peuvent également être réalisés sur les prismes eux-mêmes.

Dans le cas de veille infrarouge notamment, les bandes spectrales détectées peuvent être choisies de telle sorte à caractériser plus finement la nature de l'objet à détecter. Par exemple, un objet fabriqué par l'homme peut avoir des caractéristiques spectrales différentes d'un objet naturel, animé ou non. Les bandes spectrales détectées peuvent également être choisies, selon un procédé connu (voir par exemple la demande de brevet français FR 2 305 503) pour permettre une évaluation de la distance de l'objet à l'origine de la détection. Ceci peut être important par exemple pour différencier un objet de petites dimensions situé à courte distance et un objet de plus grandes dimensions situé à beaucoup plus grande distance.

Un autre attribut qui peut être utilisé est la caractéristique en polarisation du flux reçu. Dans ce cas, les zones du détecteur matriciel, par exemple au nombre de trois, détectent des composantes différentes de la polarisation reçue. Ceci peut permettre de différencier également un objet naturel d'un objet artificiel (métallique par exemple). La même configuration que celle décrite sur la figure 3 peut être utilisée pour analyser les attributs de polarisation en insérant des analyseurs de polarisation sur les prismes de déflexion 31.

D'autres variantes peuvent être envisagées afin d'améliorer la détection. On peut par exemple coupler les aspects bandes spectrales et polarisation.

Dans une variante supplémentaire de l'invention, les moyens de projection sont escamotables de telle sorte à pouvoir passer soit d'un mode de fonctionnement mono attribut à un mode multi attributs.

## Revendications

1. Dispositif optronique de veille passive, comprenant une optique frontale (1) de champ instantané utile donné, des moyens de balayage (2) d'une scène avec un champ total d'observation donné, des moyens de formation (3) de l'image de la scène et des moyens de détection (4) de ladite image, **caractérisé en ce que** les moyens de détection comprennent un détecteur matriciel (41) à deux dimensions, le champ du détecteur selon chacune des dimensions étant supérieur ou égal audit champ instantané utile de l'optique frontal selon ladite dimension, et permettent l'acquisition, pour chaque zone élémentaire de la scène correspondant au champ instantané utile de l'optique frontal, de N imagettes formées sur ledit détecteur, N ≥ 1, avec un temps d'intégration donné pour chaque imagette, et **en ce que** le dispositif comprend des moyens de contre-balayage (6) permettant de compenser les mouvements de l'image dus au balayage de la scène pendant l'acquisition des N imagettes.

2. Dispositif selon la revendication 1, **caractérisé en ce que** le nombre d'imagettes acquises pour chaque zone élémentaire de la scène est supérieur ou égal à 2 et **en ce que** le dispositif comprend des moyens de traitement desdites imagettes permettant d'augmenter le rapport signal sur bruit de l'image détectée.

3. Dispositif selon l'une des revendications 1 ou 2, **caractérisé en ce que** le nombre d'imagettes acquises pour chaque zone élémentaire de la scène étant supérieur ou égal à 2, **en ce que** le champ du détecteur selon l'une au moins de ses dimensions étant strictement supérieur au champ instantané utile de l'optique frontal selon ladite dimension, les moyens de contre-balayage permettent en outre la formation des imagettes sur des zones différentes du détecteur matriciel.

4. Dispositif selon la revendication 3, **caractérisé en ce que** lesdites zones sont décalées selon l'une des dimensions du détecteur matriciel de un ou plusieurs pixels dudit détecteur.

5. Dispositif selon l'une des revendications précédentes, **caractérisé en ce que** le détecteur matriciel présentant un champ supérieur à p fois le champ instantané utile de l'optique frontal selon l'une au moins de ses dimensions, p entier supérieur ou égal à 2, il comprend des moyens de projection de l'image d'une zone élémentaire de la scène correspondant audit champ instantané utile sur p zones distinctes du détecteur matriciel.

6. Dispositif selon la revendication 5, **caractérisé en ce que** lesdites moyens de projection sont escamotables.

7. Dispositif selon l'une des revendications 5 ou 6, **caractérisé en ce que** chacune des images projetées est **caractérisée par** une bande spectrale donnée.

8. Dispositif selon la revendication 7, **caractérisé en ce que** les moyens de projection comprennent un réseau de diffraction positionné sensiblement en pupille des moyens de formation de l'image.

9. Dispositif selon la revendication 7, **caractérisé en ce que** les moyens de projection sont formés de prismes (31) positionnés sensiblement en pupille des moyens de formation de l'image.

10. Dispositif selon la revendication 9, **caractérisé en ce que** des filtres passe-bande sont réalisés sur les prismes.

11. Dispositif selon l'une des revendications 7 à 9, **caractérisé en ce que** les moyens de détection comprennent des filtres passe-bande positionnés sur lesdites p zones du détecteur matriciel permettant la détection de p images selon p bandes spectrales données.

12. Dispositif selon l'une des revendications 7 à 9, **caractérisé en ce que** le détecteur matriciel présente une sensibilité spectrale distincte selon chacune desdites p zones permettant la détection de p images selon p bandes spectrales données.

13. Dispositif selon l'une des revendications 5 à 7, **caractérisé en ce que** chacune des images projetées est **caractérisée par** un attribut de polarisation donné.

14. Dispositif selon la revendication 13, **caractérisé en ce que** les moyens de projection sont formés de prismes positionnés sensiblement en pupille des moyens de formation de l'image et **en ce que** des analyseurs de polarisation sont placés en sortie de chacun des prismes afin d'attribuer à chacune desdites images projetées ledit attribut de polarisation.

15. Dispositif selon l'une des revendications précédentes, **caractérisé en ce que** le détecteur matriciel est sensible dans la bande 8-12 µm.

16. Dispositif selon l'une des revendications 1 à 14, **caractérisé en ce que** le détecteur matriciel est sensible dans la bande 3-5 µm.

17. Dispositif selon la revendication 16, **caractérisé en ce que** le détecteur matriciel est formé avec des matériaux à base d'InSb.

18. Dispositif selon l'une des revendications 15 ou 16, **caractérisé en ce que** le détecteur matriciel est formé avec des matériaux à base de composés HgCdTe, ou de type multi-puits quantiques.

19. Dispositif selon l'une des revendications précédentes, **caractérisé en que** le champ du détecteur est sensiblement égal au champ instantané selon une première direction, supérieur à trois fois le champ instantané selon la deuxième direction, et en ce que le nombre d'imagettes acquises pour chaque zone élémentaire de la scène est d'environ une vingtaine.

## Patentansprüche

1. Passive optronische Überwachungsvorrichtung, die eine frontale Optik (1) mit gegebenem momentanem Nutzfeld, Mittel (2) zum Abtasten einer Szene mit einem gegebenen Gesamtbeobachtungsfeld, Mittel zum Formen (3) des Bilds der Szene und Mittel zur Erfassung (4) des Bilds aufweist, **dadurch gekennzeichnet, dass** die Erfassungsmittel einen zweidimensionalen Matrixdetektor (41) aufweisen, wobei das Feld des Detektors gemäß jeder der Dimensionen größer als das oder gleich dem momentanen Nutzfeld der frontalen Optik gemäß dieser Dimension ist, und für jede Elementarzone der Szene, die dem momentanen Nutzfeld der frontalen Optik entspricht, die Erfassung von N auf dem Detektor gebildeten Miniaturbildern, mit N ≥ 1, mit einer gegebenen Integrationszeit für jedes Miniaturbild ermöglichen, und dass die Vorrichtung Mittel zum Gegen-Abtasten (6) aufweist, die es ermöglichen, die Bewegungen des Bilds aufgrund des Abtastens der Szene während der Erfassung der N Miniaturbilder zu kompensieren.

2. Vorrichtung nach Anspruch 1, **dadurch gekennzeichnet, dass** die Anzahl von für jede Elementarzone der Szene erfassten Miniaturbildern größer als oder gleich 2 ist, und dass die Vorrichtung Mittel zur Verarbeitung der Miniaturbilder aufweist, die es ermöglichen, das Signal/Rausch-Verhältnis des erfassten Bilds zu erhöhen.

3. Vorrichtung nach einem der Ansprüche 1 oder 2, **dadurch gekennzeichnet, dass**, da die Anzahl der für jede Elementarzone der Szene erfassten Miniaturbilder größer als oder gleich 2 ist, und dass, da das Feld des Detektors gemäß mindestens einer seiner Dimensionen strikt größer ist als das momentane Nutzfeld der frontalen Optik gemäß dieser Dimension, die Gegen-Abtastmittel außerdem die Bildung der Miniaturbilder in anderen Zonen des Matrixdetektors ermöglichen.

4. Vorrichtung nach Anspruch 3, **dadurch gekennzeichnet, dass** die Zonen gemäß einer der Dimensionen des Matrixdetektors um eines oder mehrere Pixel des Detektors versetzt sind.

5. Vorrichtung nach einem der vorhergehenden Ansprüche, **dadurch gekennzeichnet, dass** sie, da der Matrixdetektor ein Feld aufweist, das größer ist als p mal das momentane Nutzfeld der frontalen Optik gemäß mindestens einer seiner Dimensionen, wobei p eine ganze Zahl größer als oder gleich 2 ist, Mittel zur Projektion des Bilds einer Elementarzone der Szene entsprechend dem momentanen Nutzfeld auf p unterschiedliche Zonen des Matrixdetektors aufweist.

6. Vorrichtung nach Anspruch 5, **dadurch gekennzeichnet, dass** die Projektionsmittel einziehbar sind.

7. Vorrichtung nach einem der Ansprüche 5 oder 6, **dadurch gekennzeichnet, dass** jedes der projizierten Bilder durch ein gegebenes Spektralband **gekennzeichnet** ist.

8. Vorrichtung nach Anspruch 7, **dadurch gekennzeichnet, dass** die Projektionsmittel ein Beugungsgitter aufweisen, das im Wesentlichen in der Pupille der Bildformungsmittel positioniert ist.

9. Vorrichtung nach Anspruch 7, **dadurch gekennzeichnet, dass** die Projektionsmittel von Prismen (31) geformt werden, die im Wesentlichen in der Pupille der Bildformungsmittel positioniert sind.

10. Vorrichtung nach Anspruch 9, **dadurch gekennzeichnet, dass** Bandpassfilter auf den Prismen hergestellt sind.

11. Vorrichtung nach einem der Ansprüche 7 bis 9, **dadurch gekennzeichnet, dass** die Erfassungsmittel Bandpassfilter aufweisen, die in den p Zonen des Matrixdetektors positioniert sind und die Erfassung von p Bildern gemäß p gegebenen Spektralbändern erlauben.

12. Vorrichtung nach einem der Ansprüche 7 bis 9, **dadurch gekennzeichnet, dass** der Matrixdetektor in jeder der p Zonen eine andere spektrale Empfindlichkeit aufweist, was die Erfassung von p Bildern gemäß p gegebenen Spektralbändern ermöglicht.

13. Vorrichtung nach einem der Ansprüche 5 bis 7, **dadurch gekennzeichnet, dass** jedes der projizierten Bilder durch ein gegebenes Polarisationsattribut **gekennzeichnet** ist.

14. Vorrichtung nach Anspruch 13, **dadurch gekennzeichnet, dass** die Projektionsmittel von Prismen gebildet werden, die im Wesentlichen in der Pupille der Bildformungsmittel positioniert sind, und dass Polarisationsanalysatoren am Ausgang jedes der Prismen angeordnet sind, um jedem der projizierten Bilder das Polarisationsattribut zuzuweisen.

15. Vorrichtung nach einem der vorhergehenden Ansprüche, **dadurch gekennzeichnet, dass** der Matrixdetektor im Band 8-12 µm empfindlich ist.

16. Vorrichtung nach einem der Ansprüche 1 bis 14, **dadurch gekennzeichnet, dass** der Matrixdetektor im Band 3-5 µm empfindlich ist.

17. Vorrichtung nach Anspruch 16, **dadurch gekennzeichnet, dass** der Matrixdetektor mit Werkstoffen auf der Basis von InSb geformt wird.

18. Vorrichtung nach einem der Ansprüche 15 oder 16, **dadurch gekennzeichnet, dass** der Matrixdetektor mit Werkstoffen auf der Basis von HgCdTe-Verbindungen oder von der Art Vielfachquantenwell geformt wird.

19. Vorrichtung nach einem der vorhergehenden Ansprüche, **dadurch gekennzeichnet, dass** das Feld des Detektors im Wesentlichen gleich dem momentanen Feld gemäß einer ersten Richtung ist, das größer ist als das Dreifache des momentanen Felds in der zweiten Richtung, und dass die Anzahl von erfassten Miniaturbildern für jede Elementarzone der Szene etwa zwanzig beträgt.

## Claims

1. Optronic passive surveillance device, comprising a front optic (1) of given useful instantaneous field, means (2) for scanning a scene with a given total field of observation, means (3) for forming the image of the scene and means (4) for detecting said image, **characterized in that** the detection means comprise a two-dimensional matrix detector (41), the field of the detector along each of the dimensions being greater than or equal to said useful instantaneous field of the front optic along said dimension, and allow the acquisition, for each elementary area of the scene corresponding to the useful instantaneous field of the front optic, of N subimages formed on said detector (N ≥ 1), with a given integration time for each subimage, and **in that** the device includes counterscanning means (6) to make it possible to compensate for the movements of the image that are due to the scanning of the scene during the acquisition of the N subimages.

2. Device according to Claim 1, **characterized in that** the number of subimages acquired for each elementary area of the scene is greater than or equal to 2 and **in that** the device includes means for processing said subimages, allowing the signal-to-noise ratio of the detected image to be increased.

3. Device according to either of Claims 1 and 2, **characterized in that** since the number of subimages acquired for each elementary area of the scene is greater than or equal to 2 and **in that** since the field of the detector along at least one of its dimensions is strictly greater than the useful instantaneous field of the front optic along said dimension, the counterscanning means are furthermore used to form subimages on different areas of the matrix detector.

4. Device according to Claim 3, **characterized in that** said areas are shifted along one of the dimensions of the matrix detector by one or more pixels of said detector.

5. Device according to one of the preceding claims, **characterized in that** since the matrix detector has a field greater than p times the useful instantaneous field of the front optic along at least one of its dimensions, p being an integer greater than or equal to 2, it includes means for projecting the image of an elementary area of the scene corresponding to said useful instantaneous field onto p separate areas of the matrix detector.

6. Device according to Claim 5, **characterized in that** said projection means are retractable.

7. Device according to either of Claims 5 and 6, **characterized in that** each of the projected images is **characterized by** a given spectral band.

8. Device according to Claim 7, **characterized in that** the projection means comprise a diffraction grating positioned approximately at the pupil of the image formation means.

9. Device according to Claim 7, **characterized in that** the projection means are formed from prisms (31) positioned approximately at the pupil of the image formation means.

10. Device according to Claim 9, **characterized in that** band-pass filters are produced on the prisms.

11. Device according to one of Claims 7 to 9, **characterized in that** the detection means include band-pass filters positioned on said p areas of the matrix detector, allowing the detection of p images in p given spectral bands.

12. Device according to one of Claims 7 to 9, **characterized in that** the matrix detector has a separate spectral sensitivity in each of said p areas, allowing the detection of p images in p given spectral bands.

13. Device according to one of Claims 5 to 7, **characterized in that** each of the projected images is **characterized by** a given polarization attribute.

14. Device according to Claim 13, **characterized in that** the projection means are formed from prisms positioned approximately at the pupil of the image formation means and **in that** polarization analysers are placed on the exit side of each of the prisms so as to assign said polarization attribute to each of said projected images.

15. Device according to one of the preceding claims, **characterized in that** the matrix detector is sensitive in the 8-12 µm band.

16. Device according to one of Claims 1 to 14, **characterized in that** the matrix detector is sensitive in the 3-5 µm band.

17. Device according to Claim 16, **characterized in that** the matrix detector is formed with InSb-based materials.

18. Device according to either of Claims 15 and 16, **characterized in that** the matrix detector is formed with materials based on HgCdTe compounds or materials of the multiple quantum-well type.

19. Device according to one of the preceding claims, **characterized in that** the field of the detector is approximately equal to the instantaneous field in a first direction, greater than three times the instantaneous field along the second direction, and **in that** the number of subimages acquired for each elementary area of the scene is around twenty.
